# EUROPEAN PATENT APPLICATION

(11) **EP 1 879 298 A1**
(43) Date of publication of application: **16.01.2008**
(21) Application number: 06014452.4
(22) Date of filing: 12.07.2006
(51) Int. Cl.: H04B 1/69, H04L 27/36

(54) **Method and transceiver for improving the transmit power of a signal in wide band systems, in particular in UWB systems**

(71) Applicant: STMicroelectronics N.V., 1118 BH Schiphol Airport Amsterdam (NL)
(72) Inventor: Berens, Friedbert, 1202 Geneva (CH); Achkar, Eric, 74160 Saint Julien En Genevois (FR)
(74) Representative: Zapalowicz, Francis

(57) **Abstract**

The wireless transceiver comprises a transmission chain including mapping means adapted to deliver initial modulation coefficients in the frequency domain, power amplification means, antenna means having given frequency characteristics and being adapted to transmit a signal having a band of frequencies greater than 250 MHz including sub-carriers respectively modulated from said initial modulation coefficients. Said transceiver further comprises first storage means storing antenna correction coefficients associated to chosen frequencies of said band of frequencies and elaborated from said given frequency characteristics and from desired frequency characteristics of said antenna means taking into account a given amplification level of said power amplification means, and first correction means connected to the output of said mapping means and to the first storage means and adapted to correct the initial modulation coefficients associated to the sub-carriers corresponding to said chosen frequencies with the corresponding antenna correction coefficients.

## Description

The invention relates to the wireless communication systems, and more particularly to the improvement of the performance, especially for systems operating over wide band frequencies, for example Ultra Wide Band systems.

A non-limitative application of the invention is directed to devices operating according to the Ultra Wide Band (UWB) standard based on a Multiband OFDM (Orthogonal Frequency-Division Multiplexing), called MBOA (Multiband OFDM Alliance).

Orthogonal frequency-Division Multiplexing (OFDM) is a method of digital modulation in which a signal is split into several narrowband channels (sub-carriers) at different frequencies.

It is generally beneficial to improve the transmit power level of a UWB device to enhance the range and the quality of the transmission. This can lead to higher data rate for fixed distances or larger communication distances for a given data rate.

However, it is mandatory to stay below the maximum transmit peak power allowed by the spectrum regulation.

A solution for improving the transmit power which is directed in particular to a dynamic transmit power calibration has been disclosed in EP 06 005 286.7 in the name of the Applicant, the title thereof being "Method of calibrating the transmission chain of a wireless transceiver and corresponding wireless transceiver".

The invention proposes another solution for improving the overall transmit power of a wireless Wide Band system, in particular an UWB system, without violating the worldwide regulation.

The invention proposes more particularly to take into account the antenna characteristics, in particular the gain/loss characteristics, to increase the average transmit power.

As a matter of fact, in current existing systems having relatively narrow bandwidth, the antenna is assumed to have flat transmit (TX) transfer function versus frequency. The frequency behavior is not taken into account in the signal processing. This is a valid assumption for most narrow band systems like WLAN or existing mobile radio systems. However, in the case of UWB for example, the bandwidth is much higher in the range of 500 MHz and above. Here, the frequency characteristics of the antenna are getting significantly shaped. Using a sub-carriers based system, such as OFDM based system, gives the opportunity to tune the amplitude of the different sub-carriers in base band. This compensates the behavior of the antenna. The radiated signal can therefore be spectrally shaped depending on the targeted requirements, thus maximizing the emitted power.

According to an aspect of the invention, it is proposed a method of improving the transmit power a signal having a band of frequencies greater than 250 MHz, for example an UWB signal, and transmitted from a transmission chain of the wireless transceiver provided with a power amplification means and antenna means having given frequency characteristics. Said method comprises performing a transmission phase including providing initial modulation coefficients in the frequency domain and respectively modulating from said initial modulation coefficients sub-carriers to be transmitted through antenna means.

According to a general feature of the aspect of the invention, said method further comprises a correction phase performed before said transmission phase and including elaborating antenna correction coefficients associated to chosen frequencies of said band of frequencies. These antenna correction coefficients are elaborated from said given frequency characteristics and from desired frequency characteristics of said antenna means taking into account a given amplification level of said power amplification means.

Said correction phase further comprises storing said coefficients in first storage means. And, the transmission phase further comprises correcting the initial modulation coefficients associated to the sub-carriers corresponding to said chosen frequencies with the corresponding antenna correction coefficients.

Many possibilities exist for elaborating the antenna correction coefficients and for performing the correction of the initial modulation coefficients.

According to a first possibility, the correction is performed only at the base band level by using the correction coefficients. In such a case, the antenna correction coefficients are set to compensate for the passive elements of the antenna means (for example balun, filter, switches, antenna). In other words, according to such an embodiment, said given amplification level is for example a reference amplification level of the power amplification means corresponding to an allowed transmission power of said signal.

For example, in an UWB system, the maximum allowed transmission power is -41,3 dBm/MHz corresponding to a reference level (gain) of the power amplification means equal to 24 dB (assuming there is no other loss or gain in the transmission chain).

And, if for example the given frequency characteristics of the antenna means is for example a constant loss of -3 dB over the entire band of frequencies, the antenna correction coefficients will be elaborated for entirely compensate this constant loss.

According to another possibility, the improvement of the transmission power level may be obtained by splitting the correction between the base band level and the front end level. More precisely, if, for example, the passive components of the antenna means have a spectrum behavior (frequency characteristics) showing a difference of 3 dB between the highest level and the lowest level, and if the power amplification level is increased from 1,5 dB with respect to the reference level, thus, at the highest level, the sub-carrier would be transmitted with 1,5 dB above the allowed level and at the lowest level the sub-carrier would be transmitted with 1,5 dB below the allowed level.

Thus, the antenna correction coefficients of the carriers or carrier groups are elaborated to adapt the transmission power to the allowed level by, in the above example, attenuating the highest level by 1,5 dB and amplifying the lowest level by 1,5 dB.

In other words, according to such an embodiment in which an allowed transmission power of said signal corresponds for example, to a reference amplification level of said power amplification means, said reference amplification level being different from said given amplification level, the transmission phase further comprises setting the amplification level of said power amplification means to said given amplification level.

Such a "split" embodiment will reduce the overall dynamic range needed for the operation, for in particular for the analog-to-digital conversion, and the correction factors will be smaller.

According to an embodiment of the invention, said given frequency characteristics of said antenna means comprise given loss/gain characteristics of said antenna means over said band of frequencies, said desired frequency characteristics comprise desired loss/gain characteristics of said antenna means over said band of frequencies and said correcting step comprises multiplying the initial modulation coefficients associated to the sub-carriers corresponding to said chosen frequencies with the corresponding antenna correction coefficients.

Depending on the frequency granularity of the correction gains, a more or less precise correction in frequency can be performed. However, the more values they are, the higher the complexity is.

Thus, according to an embodiment of the invention, the elaborated antenna correction coefficient associated to a chosen frequency is valid for a group of adjacent sub-carriers including said chosen sub-carrier.

Although it is not compulsory, it is particularly advantageous to combine the above-mentioned correction phase with the calibration phase disclosed in EP 06 005 286.7 which is hereby incorporated by reference. This permits to obtain the very accurate optimization of the overall transmit power of the transceiver.

More precisely, according to an embodiment of the invention, the signal being transmitted during transmission periods separated by silence periods, said transmission phase is performed during said transmission periods, and said method further comprises associating a second storage means to each sub-carrier, and performing a calibration phase including :
a) disconnecting said antenna means from said transmission chain, providing a reference modulation coefficient in the frequency domain associated to a chosen sub-carrier and measuring the power of the corresponding reference signal delivered at a location of said transmission chain, during one silence period,
b) calculating from the result of said measurement and from said reference modulation coefficient, a gain correction coefficient for that sub-carrier,
c) storing said calculated gain coefficient in the storage means associated to said sub-carrier,
d) repeating steps a) to c) for other chosen sub-carriers, the steps a) respectively associated to all chosen sub-carriers being performed during a same or different silence periods, and
said transmission phase further comprises correcting also said initial modulation coefficients with the content of the corresponding second storage means.

According to another aspect of the invention, it is also proposed a wireless transceiver, comprising a transmission chain including mapping means adapted to deliver initial modulation coefficients in the frequency domain, power amplification means, antenna means having given frequency characteristics and being adapted to transmit a signal having a band of frequencies greater than 250 MHz including sub-carriers respectively modulated from said initial modulation coefficients, characterized by the fact that said transceiver further comprises first storage means storing antenna correction coefficients associated to chosen frequencies of said band of frequencies and elaborated from said given frequency characteristics and from desired frequency characteristics of said antenna means, and first correction means connected to the output of said mapping means and to the first storage means and adapted to correct the initial modulation coefficients associated to the sub-carriers corresponding to said chosen frequencies with the corresponding antenna correction coefficients.

According to an embodiment of the invention, said given amplification level is a reference amplification level of said power amplification means corresponding to an allowed transmission power of said signal.

According to another embodiment of the invention, an allowed transmission power of said signal corresponds to a reference amplification level of said power amplification means which is different from said given amplification level, and said transceiver further comprises setting means adapted to set the amplification level of said power amplification means to said given amplification level.

According to an embodiment of the invention, said given frequency characteristics of said antenna means comprise given loss/gain characteristics of said antenna means over said band of frequencies, said desired frequency characteristics comprise desired loss/gain characteristics of said antenna means over said band of frequencies and said first correction means comprises multiplication means adapted to multiply the initial modulation coefficients associated to the sub-carriers corresponding to said chosen frequencies with the corresponding antenna correction coefficients.

According to another embodiment of the invention, the wireless transceiver further comprises
- control means adapted to authorize said transmission during transmission periods separated by silence periods,
- calibration means including second storage means associated to each sub-carrier, generating means adapted to deliver a reference modulation coefficient in the frequency domain associated to a chosen sub-carrier, measurement means connected at a location of said transmission chain and adapted to measure at location the power of the reference signal corresponding to said reference modulation coefficient, processing means adapted to calculate from the result of said measurement and from the value of said reference modulation coefficient a gain correction coefficient for that sub-carrier and to store said calculated gain correction coefficient in the second storage means associated to said sub-carrier,
- calibration control means adapted to disconnect said antenna means from said transmission chain and activate at least said generating means and said measurement means during one or several silence periods for several chosen sub-carriers, and
- second correction means connected to the output of said mapping means and to the second storage means and adapted to correct also each initial modulation coefficient with the content of the corresponding storage means.

According to an embodiment of the invention, the wireless transceiver comprises adding means connected to the output of said first storage means and to the output of said second storage means and multiplication means having an input connected to the output of said mapping means and another input connected to the output of said adding means, said adding means and said multiplication means forming said first and second correction means.

The signal is for example an UWB signal modulated according to a MB-OFDM modulation scheme.

Other advantages and features of the invention will appear on examining the detailed description of embodiments, these being in no way limiting, and of the appended drawings in which:
- figure 1 illustrates diagrammatically the internal protocol structure of a wireless transceiver according to an embodiment of the invention;
- figure 2 illustrates more in detail the internal structure of the transceiver of figure 1;
- figure 3 illustrates diagrammatically MBOA hopping sub-bands ;
- figures 4 and 5 illustrate diagrammatically spectrum characteristics of antenna means,
- figures 6 and 7 illustrate flow charts related to embodiments of a method according to the invention,
- figure 8 illustrates more in details the internal structure of another embodiment of a transceiver according to the invention, and,
- figures 9 and 10 illustrate flow charts related to another embodiment of a method according to the invention.

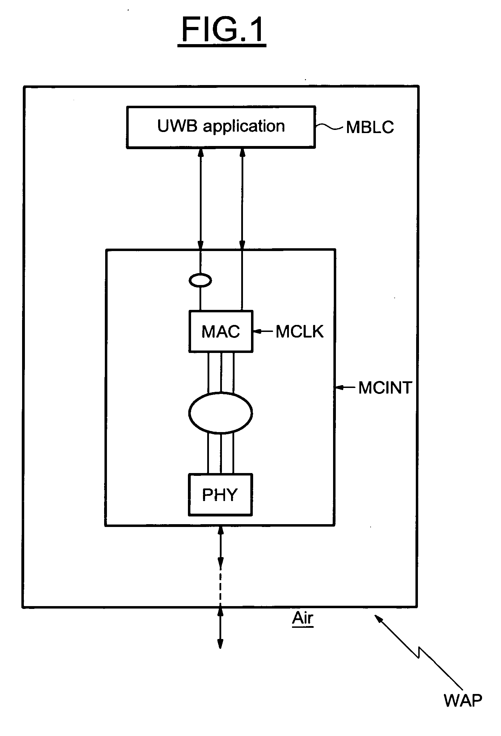

Figure 1 discloses an example of a wireless communication apparatus or transceiver WAP belonging to a non-coordinated communication system such as a WPAN ("Wireless Personal Area Network").

Such a wireless apparatus WAP belongs for example to an OFDM based Ultra Wide Band Communication system.

WPAN MAC protocols have a distributed nature where there is no central coordinator terminal or base station to assign the medium access. There, in contrast to a mobile radio terminal, a WPAN transceiver has much higher flexibility to allocate the transmission slot and formats. The allocation of the communication resources is a distributed process. The allocation to a specific time slot in the super frame can be modified from one superframe to the next. The controlling entity is the WPAN-MAC layer of the communicating terminals. The allocation is based on the requested data rate and the type of service to be transmitted. Furthermore, the available resources are taken into account in the allocation process. The MAC layer requests a reservation for a specific time slot or a number of time slots based on these constraints. These constraints can be split into local constraints, like the data rate to be transmitted or received and network wide constraints like the already existing slot reservation.

An example of distributed WPAN-MAC is MBOA MAC.

The MBOA standard draft is based on a UWB technology and is planed to be used in the frequency band between 3,1 and 10,7 GHz. First implementations using the standard work in the frequency range between 3,1 GHz and 5,0 GHz.

The wireless apparatus WAP comprises an OFDM based UWB communication interface MCINT connected between the UWB application block MBLC and the communication medium (here air).

This communication interface MCINT comprises an UWB MAC layer clocked by a clock signal MCLK and connected to the PHY layer and to the UWB application block MBLC.

For further details concerning the MAC layer and the PHY layer of the communication interface, the man skilled in the art may refer to the High Rate Ultra Wideband PHY and MAC Standard, Standard ECMA-368, 1^{st} edition, December 2005, and to the MAC-PHY Interface for ECMA-368, Standard ECMA-369, 1^{st} edition, December 2005.

The MAC layer manages in particular the emission/reception of the UWB data stream and is incorporated by software in a control processor.

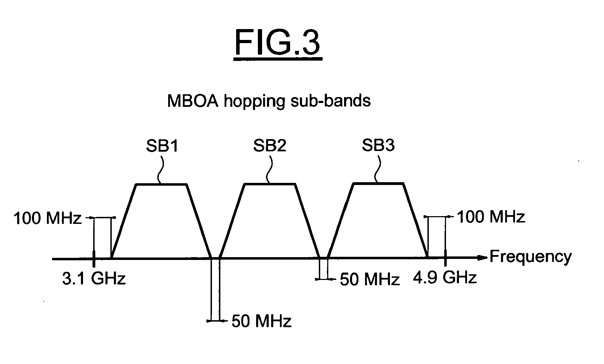

In figure 3 it can be seen that the main band of frequencies used for the operation (transmission and/or reception) of the transceiver lies here between 3,1 GHz and 4,9 GHz. Further, the frequency band is subdivided into three sub-bands SB1, SB2, SB3, called hopping sub-bands, which are mutually spaced. More precisely, there is a guard interval of 100 MHz between the lower limit (3,1 GHz) of the frequency band and the beginning of the first sub-band SB1 as well as between the end of the third sub-band SB3 and the upper limit (4,9 GHz) of the frequency band.

Further, two adjacent sub-bands are spaced by a guard interval of 50 MHz.

The allocation of the sub-bands during the transmission is made according to a predetermined hopping sequence.

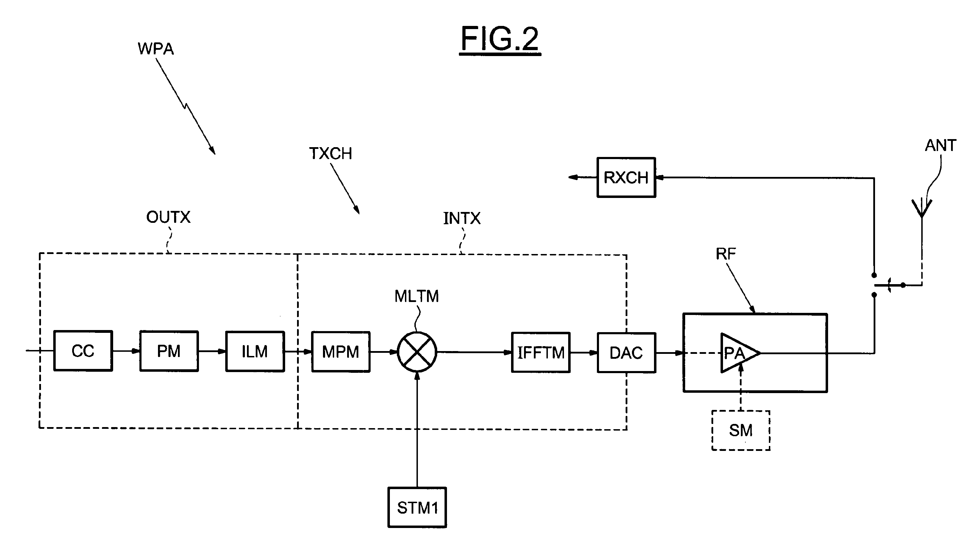

Referring now more particularly to figure 2, the communication interface of the transceiver WPA comprises a transmission chain TXCH and a receiving chain RXCH, both coupled to an antenna means ANT through a switch or analogue circuit.

The transmission and receiving chains work in a half duplex scheme. In operating mode the transmit level is much higher than the received level, making impossible simultaneous transmission and reception of the transmitted waveform. This is the reason why a switch or an attenuation system generally exists in order to couple each chain to the antenna only when needed.

Conventionally, a MB-OFDM digital baseband symbol is composed of 128 sub-carriers (corresponding to data, pilots, etc.). The transmitted data is generated by computing the IFFT (Inverse Fast Fourier Transform) of 128 frequency-domain digital baseband samples and padding the result with 37 zeroed samples. The whole symbol (165 samples) has a duration of 312.5 ns.

As depicted in figure 2, a transmitter TX according to an embodiment of the invention comprises a digital baseband stage (including an outer transmission block OUTX and an inner transmission block INTX) coupled to an analog radio frequency stage RF ("front end" stage) by a digital-to-analog conversion stage DAC.

In a conventional manner, the transmission chain comprises an encoder CC, for example a convolutional encoder, receiving data from source coding means and delivering a bits stream to puncturing means PM which delivers a punctured bits stream.

Interleaving means ILM are connected to the output of the puncturing means and are followed by mapping means MPM which map the bits into symbols according to a modulation mapping scheme depending on the kind of used modulation, for example a BPSK modulation or more generally a QAM modulation.

The successive symbols delivered by the mapping means MPM are MB-OFDM digital baseband symbols. Each symbol is a group containing 128 modulation coefficients respectively associated to 128 sub-carriers to be modulated accordingly.

Of course, a group of 128 samples (modulation coefficients) is delivered on the I branch whereas another corresponding group of 128 samples is delivered on the Q branch.

These successive frequency domain groups of digital complex modulation coefficients, which are called here "initial modulation coefficients", are then delivered, after correction (as it will be explain more in details thereafter), to an OFDM modulator IFFTM, which performs an IFFT processing in order to associate a modulation coefficient to a sub-carrier and to form an OFDM symbol which comprises 128 modulated sub-carriers.

The means belonging to the digital baseband stage may be realized for example by software within a microprocessor. Another possibility would consist in realizing at least some of these means, for example IFFT means, by specific ASICs.

The time-domain symbols delivered by the OFDM modulator IFFTM are then processed in the conventional radio frequency stage RF after having been converted into a DAC stage, and before being transmitted on air through antenna ANT. The radio frequency stage further comprises power amplification means PA. Depending on the application these means may include a real power amplifier eventually associated with a power pre-amplification stage on chip, or only a power pre-amplification stage on chip as it is the case for UWB application.

Further to these means, multiplication means MLTM are connected between the mapping means MPM and the OFDM modulator IFFTM. Another input of the multiplication means MLTM is connected to first storage means STM1. This first storage means may comprise, for example, 125 registers respectively associated to the 128 tones of sub-carriers respectively modulated by the 128 digital initial modulation coefficients delivered by the mapping means.

Another possibility will consist in using a single memory having 128 memory cells located at 128 different addresses.

As it will be explain more in details thereafter, these first storage means STM1 contain antenna correction coefficients related to the spectrum characteristics (frequency characteristics) of the antenna means ANT.

In contrast to existing narrow band systems were the antenna is optimized to the used band, a UWB system uses an antenna with very different characteristics in the different parts of the transmission part. This comes from the very large band occupied by the UW signal. It is not possible to build antennas and filters that are completely flat in the full TX spectrum. This is even important for dual band UWB systems using the band 3.1 GHz to 5 GHz and the band above 6 GHz.

Different antennas might be used for different system implementations (USB-dongle, fixed PC-implementation, embedded implementation). Generally speaking, the antenna means may comprise passive elements such as the antenna itself, a balun and a filter, for example a SAW filter.

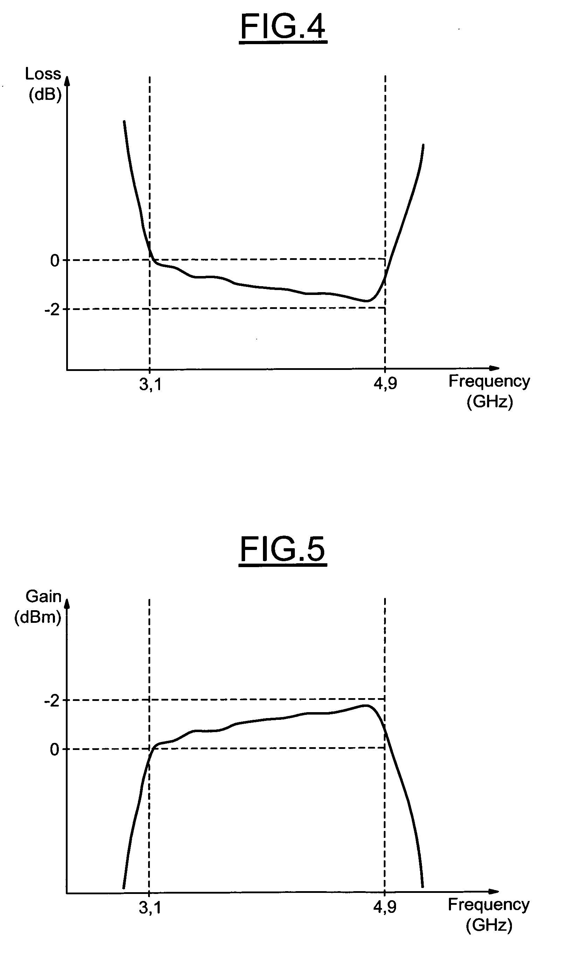

An example of a spectrum behavior of a UWB antenna means is given in figure 4 which illustrates the loss/gain characteristics (here the loss) of the antenna means versus frequency.

Such a loss figure is fixed taking into account the structure of the antenna means is given by the designer and/or manufacturer of the antenna means.

As it can be seen in figure 4, the loss curve is not flat within the used band of frequencies.

Thus, in order to obtain a flat figure, for example a loss of 0 dB within substantially all the used band of frequencies, it is thus necessary to have a gain figure (desired spectrum characteristics) as illustrated in figure 5.

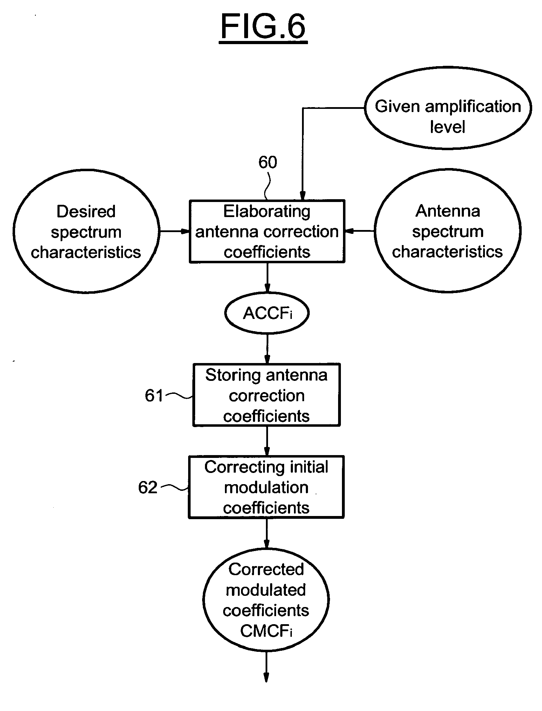

From the gain curve of figure 5, antenna gain correction coefficients can be determined theoretically for each frequency of the band of frequencies. Then, as the initial modulation coefficients delivered by the mapping means MPM correspond to amplitude values, the antenna correction coefficients ACCFᵢ (figure 6) which are stored (step 61) in the first storage means STM1, correspond to the square root values of the gain values of figure 5.

Of course, it would be possible to determine an antenna correction coefficient ACCFᵢ for each of the 128 tones of the OFDM symbol. However, an elaborated antenna correction coefficient associated to a chosen frequency can be considered as being valid for a group of adjacent sub-carriers including said chosen sub-carrier, for example for a group of 8 adjacent sub-carriers.

In other words, every 8 OFDM sub-carrier, a correction would be sufficient.

The initial modulation coefficients delivered by the mapping means are then corrected (step 62) by multiplying an initial modulation coefficient by its corresponding antenna correction coefficient.

Thus, corrected modulated coefficients CMCFi are delivered by the multiplication means MLTM.

As illustrated in figure 6, the antenna correction coefficients have been elaborated taking into account a given amplification level of the power amplification means PA. For example, if the given amplification level is a reference amplification level (for example a gain of 24 dB) corresponding to an allowed transmission level of the transmitted signal, the antenna correction coefficients permit themselves to compensate for the loss of the antenna.

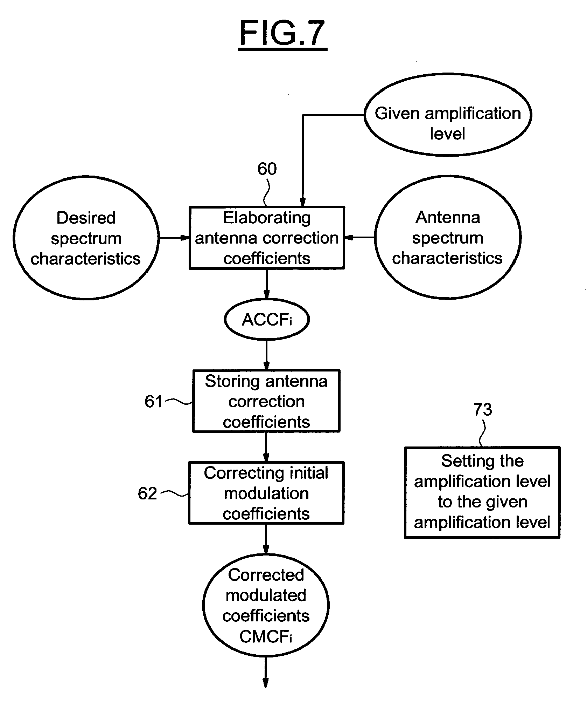

However, another possibility exists which is illustrated in figure 7.

In this figure, we assume that the antenna spectrum characteristics (spectrum behavior of the passive components) exhibit a difference of 3 dB between the highest level and the lowest level.

Further, the given amplification level is here increased of 1,5 dB with respect to the reference level of the power amplification means, corresponding to the allowed transmission power.

Thus, taking into account this given amplification level, at the highest level, the sub-carrier would be transmitted with 1,5 dB above the allowed level and at the lowest level, the sub-carrier would be transmitted with 1,5 dB below the allowed level.

Accordingly, the antenna correction coefficients are elaborated, taking into account this given amplification level, to adapt the transmission power to the allowed level.

More precisely, in the present example, the antenna correction coefficients are elaborated such that the highest level will be attenuated by 1,5 dB and the lowest level will be amplified by 1,5 dB.

Thus, during the transmission phase, the initial modulation coefficients are corrected by the antenna correction coefficients and simultaneously, the amplification level of the power amplification means PA is set to the given amplification level (step 73).

Such a setting is performed by setting means SM (figure 2) which can be for example realized by software within the base band processor.

Whatever the kind of correction ("split correction" or not), since the transceiver is adapted to work over a set of three subbands, each having 128 sub-carriers, the correction of the initial modulation coefficients is generally different in each of the sub-bands. Especially the additional correction performed in the power amplification means PA might have different settings depending on the sub-band in use.

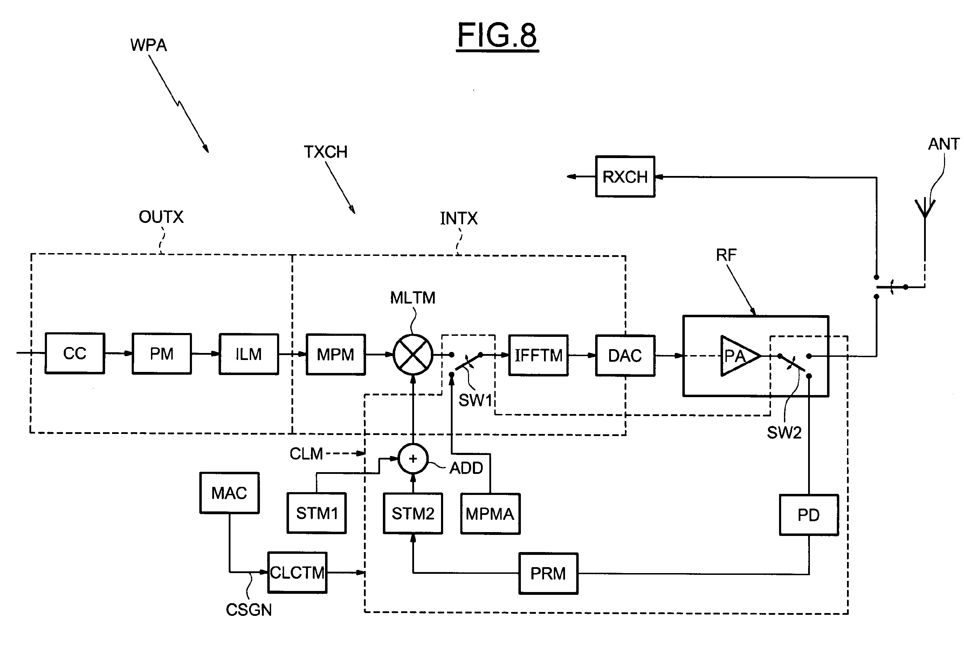

Another embodiment of the invention, combining the use of antenna correction coefficients (with or without the above mentioned "split" correction) with gain correction coefficients determined during a calibration phase as disclosed in the above-mentioned European patent application, will be now described more in details with reference to figure 8 and following.

The physical layer PHY of the communication interface of the wireless transceiver comprises also calibration means CLM connected to the transmission chain through two controllable switches SW1 and SW2.

The first switch SW 1 is connected upstream the OFDM modulator IFFTM whereas the second switch SW2 is located at a second location of the transmission chain. This second location is located after the power amplifier stage of the stage RF.

Further, multiplication means MLTM are connected between the mapping means MPM and the first switch SW1.

The calibration means CLM comprises a conventional peak detector PD followed by processing means including a conventional circuit adapted to transform the measured value delivered by the peak detector into its digital representation for further exploitation by the other components of the processing means.

The calibration means comprises also second storage means STM2 associated to each sub-carrier. More precisely, these storage means may comprise in this example 128 registers respectively associated to the 128 tones or sub-carriers respectively modulated by the 128 digital initial modulation coefficients delivered by the mapping means.

Another possibility will consist in using a single memory having 128 memory cells located at 128 different addresses.

The correction means adapted to correct the initial modulation coefficients delivered by the mapping means MPM comprises the multiplication means MLTM but also an adder (adding means) ADD having an input connected to the output of the first storage means STM1 and a second input connected to the output of the second storage means STM2.

The output of the adder ADD is connected to the other input of the multiplication means MLTM.

The calibration means CLM further comprises generating means MPMA adapted to deliver in the frequency domain a reference modulation coefficient associated to a chosen sub-carrier (a chosen tone). Practically, the generating means may be realized by means identical to the mapping means MPM.

The calibration means are controlled by calibration control means CLCTM which are adapted to activate the calibration means during one ore several silence periods for several chosen sub-carriers, as it will be explained more in details thereafter.

More precisely, when the calibration means are activated, the generating means MPMA are actually connected to the OFDM modulator IFFTM and the peak detector is actually connected to the output of the power amplifier stage PA.

When the calibration means are not activated, the power amplifier stage PA is actually connected to the antenna ANT and the multiplication means MLTM are actually connected to the OFDM modulator IFFTM.

The processing means PRM may be realized by software within a microcontroller or by a specific ASIC. The calibration control means CLCTM may be realized by logic circuits, for example.

Further, in the described example, the calibration control means CLCTM are adapted to activate the calibration means CLM upon reception of a control signal CSGN delivered here by a high level algorithm, for example the MAC layer of the communication interface of the wireless transceiver WPA.

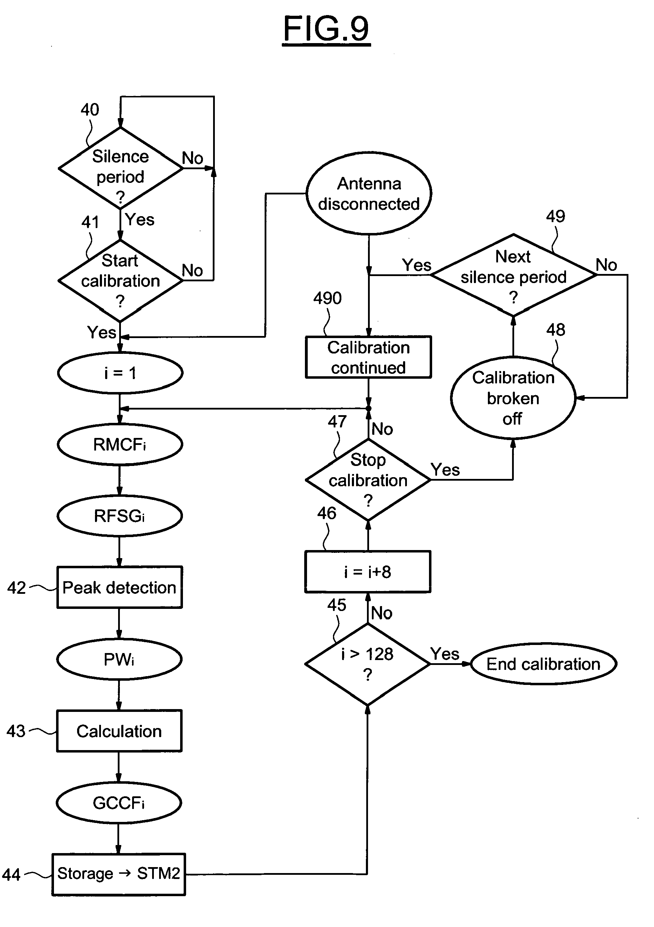

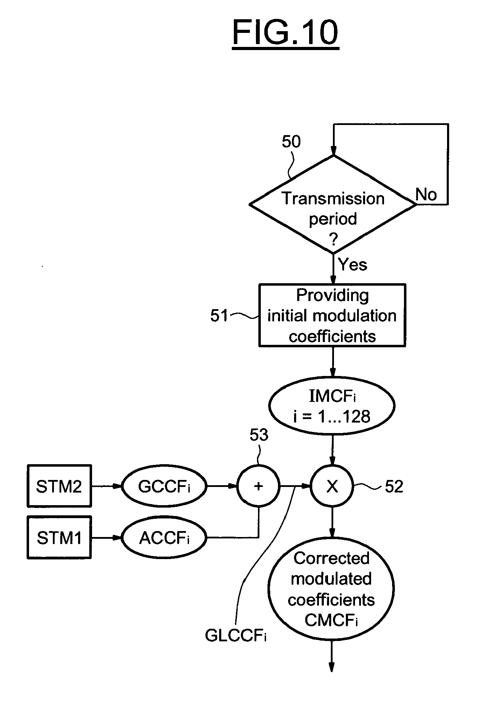

The operation of the transceiver, and more particularly the calibration means, will be now described more in details with reference to figures 9 and 10, more particularly.

In WPANs or similar wireless systems, the transmission is performed in packet mode, which means that data and signalling are sent by mean of subsequent bursts of modulated waveform followed by periods of silence, the minimum duration of which is determined in the related standard. For proper operation, at least some steps of the calibration occur during silence period, implying several consequences:
- detection of the start of a silence period after any transmit or received packet,
- detection of the end of a silence period and any tone measurement ongoing at this time must be stopped instantaneously, or (preferably) the duration of a tone measurement must be shorter than the minimum silence period duration (often called SIFS for Short IFS).

Two different solutions are possible for triggering the measurement process at PHY level:
a) The control process determines after which specific frame (e.g. beacon frames or equivalent in TDMA based networks) the measurement process must occur and presets this start condition in the baseband stage. This is advantageous when the number of measurement per unit of time must be controlled, e.g. for power saving management,
b) the base band digital stage autonomously detects the next start of a silence period and then automatically processes the tone measurement.

The minimum guaranteed silence period (SIFS) being generally very short, the calibration tone generation/measurement are chosen to be short enough to be comprised in a silence period.

Hereafter an algorithm will be described in the case of TDMA WPANs, where specific messages (e.g. beacon packets) are transmitted frequently enough. This corresponds to the solution a).

It has to be noted that in non TDMA networks (e.g. non deterministic occurrence of packets), either the network is heavily loaded, meaning that packets and therefore silence periods are very frequent, resulting in solution b), or the network is moderately or lightly loaded, resulting in solution a) or in a combination of solution a) and solution b).

Here an algorithm is presented in the case of TDMA based wireless networks, where the TDMA cycle is short compared to the variation of the parameters impacting the spectrum flatness of the transmitter.

A numerical example extracted from MBOA UWB WPAN is the following one:
- the basic TDMA cycle period is 65.536 ms, and at least one specific message called beacon starts each cycle, followed by more messages (typically many). The beacon message is easily detectable by the protocol layer (above the PHY layer),
- the silence period duration (IFS for Interframe Spacing) after each sent packet (called frame at the PHY layer level) is about 10 µs,
- in semiconductor realizations, most of the transmit spectrum flatness variation is caused by temperature variation, and results in significant changes only after a few seconds or more,
- there are 3 * 128 tones (3 sub-bands) and no noticeable variation in spectrum can be detected within an adjacent group of 4 to 8 tones, meaning that one measurement per 4 to 8 adjacent tones is sufficient.

Although there is a silence period between the OFDM symbols (each including 128 tones), respectively transmitted within the three sub-bands, this silence period (about 10 ns) is too short for performing the tone measurement of the calibration phase.

Accordingly, in the present example, the silence periods within which a calibration phase is performed are the interframe spacing.

After the transceiver has been powered on and before any transmission of the UWB signal, a set of initial values for a gain correction coefficients are stored in the second storage means STM2. These initial values may result from an in-production calibration. These initial values are determined, for example, to obtain a spectrum flatness of the transmitter together with an optimum level of transmitted power.

As illustrated in figure 8, the calibration phase starts within a silence period. However, since for example in the MBOA UWB WPAN example, there is no significant changes in the spectrum flatness due to temperature variation after a few second or more, it is not necessary to start a calibration within each silence period but for example every three or four seconds.

Before starting the calibration phase, the antenna ANT is disconnected from the transmission chain in order to avoid any disturbance during the calibration phase.

It is now assumed that in step 41, the calibration has started.

For i=1, i.e. for the first tone of frequency of sub-carrier, a reference modulation coefficient RMCFi associated to this chosen sub-carrier, is generated by the generating means MPMA.

This reference modulation coefficient in the frequency domain is in fact here a chosen constant defining a chosen sub-carrier amplitude coefficient.

If the generating means are analogous to the mapping means MPM, generating one coefficient for one sub-carrier is equivalent to cancelling all other tones i.e. to delivering zero on all the outputs of the generating means MPMA except for the output associated to the chosen sub-carrier.

Of course, any other form of OFDM tone generator MPMA can be used, e.g. a CORDIC circuitry (circuitry adapted to perform a well-known COordinate Rotation DIgital Computer algorithm).

After a frequency domain to time-domain conversion and a digital-to-analog conversion as well as a RF processing, the corresponding reference signal RFSGi is delivered at the output of the amplifier stage PA.

The peak detector PD performs a peak detection (step 42) of this reference signal. The result of this peak detection is a power information PWi, which represents in fact the amplitude of this reference signal. As the calibration is performed tone per tone, only one sine wave corresponding to a single frequency is sent within the transmission chain. Thus detecting the maximum value of the corresponding signal thanks to the peak detector permits to obtain very simply the power information related to the energy or level of the signal.

Then, the processing means PRM calculates from this power information PWi and from the reference modulation coefficient RMCFi, a relative attenuation value of the signal.

Then, the inverse of this relative value is multiplied (step 43) by the initial value of the corresponding coefficient associated to this sub-carrier for obtaining a gain correction coefficient which is stored in the corresponding register associated to the sub-carrier (step 44).

This gain correction coefficient is referenced GCCFi.

Of course, if "i" is greater than 128, then the calibration is stopped (step 45).

On the contrary, the calibration is continuing by incrementing "i" with 8 (step 46). As a matter of fact, as indicated above, there is no noticeable variation spectrum within an adjacent group of 8 tones, for example. In other words, the gain correction coefficient GCCF1 calculated for sub-carrier 1, is also available for sub-carriers 1-8.

The calibration process is continuing (steps 42-46) as long as the silence period is not finished.

However, if during the calibration processing, the end of the silence period is detected, the calibration is broken off (step 48) until next silence period (step 49) where the calibration is continued (step 490).

In the present example, all the steps of the calibration phase are performed within one or several silence periods. However, theoretically, only the generation of the reference modulation coefficients as well as the peak detections, are performed within the silence periods. As a matter of fact, the other steps of the calibration phase, i.e. the calculation of the gain correction coefficients, (as well as their storage in the storing means) may be performed within transmission periods.

Turning now to figure 10, it can be seen that during the transmission period, the initial modulation coefficients IMCFi (i=1...128), which are provided (step 51) from the mapping means MPM, are corrected by corresponding global correction coefficients GLCCFᵢ which are the algebraic sum (53) of the corresponding gain correction coefficients GCCFi stored in the second storing means STM2 and the corresponding antenna correction coefficients ACCFᵢ stored in the first storage means STM1. More precisely, the initial modulation coefficients IMCFᵢ are respectively multiplied by the corresponding global correction coefficients GLCCFi for obtaining corrected modulated coefficients CMCFi which will be delivered to the OFDM modulator IFFTM.

And in fact, as far as a new gain correction coefficient has not been computed and stored in the second storage means STM2, the initial modulation coefficients provided by the mapping means MPM are corrected with the previous content of the storage means STM2 and with the content of the first storage means STM1.

## Claims

1. Method for improving the transmit power of a signal having a band of frequencies greater than 250 MHz and transmitted from a transmission chain of a wireless transceiver provided with a power amplification means and antenna means having given frequency characteristics, comprising performing a transmission phase including providing initial modulation coefficients in the frequency domain and respectively modulating from said initial modulation coefficients sub-carriers to be transmitted through antenna means, **characterized by** the fact said method further comprises a correction phase performed before said transmission phase and including elaborating (60) antenna correction coefficients associated to chosen frequencies of said band of frequencies from said given frequency characteristics and from desired frequency characteristics of said antenna means taking into account a given amplification level of said power amplification means, and storing (61) said coefficients in first storage means (STM1), and by the fact that said transmission phase further comprises correcting (62) the initial modulation coefficients associated to the sub-carriers corresponding to said chosen frequencies with the corresponding antenna correction coefficients.

2. Method according to claim 1, wherein said given amplification level is a reference amplification level of said power amplification means corresponding to an allowed transmission power of said signal.

3. Method according to claim 1, wherein an allowed transmission power of said signal corresponds to a reference amplification level of said power amplification means which is different from said given amplification level, and said transmission phase further comprises setting (73) the amplification level of said power amplification means to said given amplification level.

4. Method according to any one of the preceding claims, wherein the band of frequencies is subdivided into several sub-bands and said antenna correction coefficients and/or said given amplification level are different for each sub-band.

5. Method according to any one of the preceding claims, wherein said signal is an UWB signal.

6. Method according to any one of the preceding claims, wherein said given frequency characteristics of said antenna means comprise given loss/gain characteristics of said antenna means over said band of frequencies, said desired frequency characteristics comprise desired loss/gain characteristics of said antenna means over said band of frequencies and said correcting step comprises multiplying the initial modulation coefficients associated to the sub-carriers corresponding to said chosen frequencies with the corresponding antenna correction coefficients.

7. Method according to any one of the preceding claims, wherein the elaborated antenna correction coefficient associated to a chosen frequency is valid for a group of adjacent sub-carriers including said chosen sub-carrier.

8. Method according to any one of the preceding claims, wherein the signal being transmitted during transmission periods separated by silence periods, said transmission phase is performed during said transmission periods, and said method further comprises associating a second storage means (STM2) to each sub-carrier, and performing a calibration phase including
a) disconnecting said antenna means from said transmission chain, providing a reference modulation coefficient (RMCFi) in the frequency domain associated to a chosen sub-carrier and measuring (42) the power of the corresponding reference signal delivered at a location of said transmission chain, during one silence period,
b) calculating (43) from the result (PWi) of said measurement and from said reference modulation coefficient, a gain correction coefficient (GCCFi) for that sub-carrier,
c) storing (44) said calculated gain coefficient in the storage means associated to said sub-carrier,
d) repeating steps a) to c) for other chosen sub-carriers, the steps a) respectively associated to all chosen sub-carriers being performed during a same or different silence periods, and
said transmission phase further comprises correcting also said initial modulation coefficients with the content of the corresponding second storage means.

9. Method according to any one of the preceding claims, wherein said signal is an UWB signal modulated according to a MB-OFDM modulation scheme.

10. Wireless transceiver, comprising a transmission chain including mapping means adapted to deliver initial modulation coefficients in the frequency domain, power amplification means, antenna means having given frequency characteristics and being adapted to transmit a signal having a band of frequencies greater than 250 MHz including sub-carriers respectively modulated from said initial modulation coefficients, **characterized by** the fact that said transceiver further comprises first storage means storing antenna correction coefficients associated to chosen frequencies of said band of frequencies and elaborated from said given frequency characteristics and from desired frequency characteristics of said antenna means taking into account a given amplification level of said power amplification means, and first correction means connected to the output of said mapping means and to the first storage means and adapted to correct the initial modulation coefficients associated to the sub-carriers corresponding to said chosen frequencies with the corresponding antenna correction coefficients.

11. Wireless transceiver according to claim 10, wherein said given amplification level is a reference amplification level of said power amplification means corresponding to an allowed transmission power of said signal.

12. Wireless transceiver according to claim 10, wherein an allowed transmission power of said signal corresponds to a reference amplification level of said power amplification means which is different from said given amplification level, and said transceiver further comprises setting means adapted to set the amplification level of said power amplification means to said given amplification level.

13. Wireless transceiver according to any one of claims 10 to 12, wherein the band of frequencies is subdivided into several sub-bands and said antenna correction coefficients and/or said given amplification level are different for each sub-band.

14. Wireless transceiver according to any one of claims 10 to 13, wherein said signal is an UWB signal.

15. Wireless transceiver according to any one of claims 10 to 14, wherein said given frequency characteristics of said antenna means comprise given loss/gain characteristics of said antenna means over said band of frequencies, said desired frequency characteristics comprise desired loss/gain characteristics of said antenna means over said band of frequencies and said first correction means comprises multiplication means adapted to multiply the initial modulation coefficients associated to the sub-carriers corresponding to said chosen frequencies with the corresponding antenna correction coefficients.

16. Wireless transceiver according to any one of the claims 10 to 15, further comprising
- control means adapted to authorize said transmission during transmission periods separated by silence periods,
- calibration means (CLM) including second storage means associated to each sub-carrier, generating means adapted to deliver a reference modulation coefficient in the frequency domain associated to a chosen sub-carrier, measurement means connected at a location of said transmission chain and adapted to measure at location the power of the reference signal corresponding to said reference modulation coefficient, processing means adapted to calculate from the result of said measurement and from the value of said reference modulation coefficient a gain correction coefficient for that sub-carrier and to store said calculated gain correction coefficient in the second storage means associated to said sub-carrier,
- calibration control means (CLCTM) adapted to disconnect said antenna means from said transmission chain and activate at least said generating means and said measurement means during one or several silence periods for several chosen sub-carriers, and
- second correction means (MLTM) connected to the output of said mapping means and to the second storage means and adapted to correct also each initial modulation coefficient with the content of the corresponding storage means.

17. Wireless transceiver according to claim 16, comprising adding means (ADD) connected to the output of said first storage means (STM1) and to the output of said second storage means (STM2) and multiplication means (MTLM) having an input connected to the output of said mapping means and another input connected to the output of said adding means, said adding means (ADD) and said multiplication means (MTLM) forming said first and second correction means.

18. Wireless transceiver according to any one of claims 10 to 17, wherein said signal is an UWB signal modulated according to a MB-OFDM modulation scheme.
